# EUROPÄISCHE PATENTSCHRIFT

(11) **EP 1 174 319 B1**
(45) Veröffentlichungstag und Bekanntmachung des Hinweises auf die Patenterteilung: **22.09.2004**
(21) Anmeldenummer: 01114087.8
(22) Anmeldetag: 09.06.2001
(51) Int. Cl.: B60T 8/00, B60T 7/22

(54) **Verzögerungssystem für Kraftfahrzeuge**
Deceleration system for motor vehicle
Système de commande de décélération pour un véhicule automobile

(30) Priorität: 17.07.2000 DE 10034723
(43) Veröffentlichungstag der Anmeldung: 23.01.2002
(73) Patentinhaber: Wefelmeier, Friedrich-Karl, Dr., 49661 Cloppenburg (DE)
(72) Erfinder: Wefelmeier, Friedrich-Karl, Dr., 49661 Cloppenburg (DE)
(74) Vertreter: Kohlmann, Kai, Dipl.-Ing.

(56) Entgegenhaltungen:
- DE-A- 4 110 345
- DE-A- 4 335 682
- DE-A- 19 750 942
- DE-C- 19 640 929
- US-A- 3 790 780

## Beschreibung

Die Erfindung betrifft ein Verzögerungssystem für Kraftfahrzeuge, wobei das Kraftfahrzeug mit einer Sende-/Empfangseinheit sowie einer Regel-/Steuereinheit ausgerüstet ist, die bei Empfang eines definierten Signals mindestens ein Bremssystem des Kraftfahrzeuges auslöst.

Als Verzögerungssysteme kommen insbesondere Bremsen zum Einsatz, also Vorrichtungen zur Verzögerung der bewegten Masse des Kraftfahrzeuges bis zur Ruhe, zur Sicherung dieses Zustandes sowie zur Kontrolle der Geschwindigkeit der bewegten Masse. Die Bremsung wird regelmäßig durch äußere Reibung beim Kraftfahrzeug erzeugt. Die gebräuchlichsten Reibungsbremsen für Kraftfahrzeuge sind Trommel- und Scheibenbremsen. Unterstützt werden diese Verzögerungssysteme in modernen Fahrzeugen durch Anti-Blockier-Systeme (ABS) und teilweise durch das sogenannte ESP (Elektronisches Stabilitätsprogramm).

Bei herkömmlichen Verzögerungssystemen, insbesondere bei Kolonnenfahrt, ist die Reaktionszeit des einzelnen Kraftfahrzeugführers bei Notbremsungen vielfach für einen Unfall ursächlich. Häufig lässt sich bei der zunehmenden Verkehrsdichte der geforderte Sicherheitsabstand kaum noch einhalten, so dass es zu Auffahrunfällen und infolge dessen zu Massenkarambolagen kommt. Die zunehmende Zahl der Auffahrunfälle in den vergangenen Jahren hat nach Angaben der Bundesvereinigung der Arbeitsgemeinschaften der Notärzte Deutschland (BAND) zu einem erheblichen Anstieg der Verletzung der Halswirbelsäule geführt. Der Kollisionstyp PKW gegen PKW weist seit Jahren die höchste Steigerungsquote auf, wobei die Auffahrunfälle mit rund 50 % beteiligt sind.

Die DE 197 36 915 A1 betrifft eine funkgesteuerte Abbremssteuerung, die beispielsweise von Ampelanlagen oder fahrbahnüberquerungswilligen Passanten ausgelöst wird.

Aus der DE 36 43 169 A1 ist eine Vorrichtung für Kraftfahrzeuge zur Verhütung von Auffahrunfällen bekannt, die aus einem Sender und einem Empfänger für elektromagnetische Wellen und einer Auswerteeinheit besteht. Der Sender strahlt die Wellen wie ein Radarsystem in Fahrtrichtung ab. Die von dem davor befindlichen Fahrzeug reflektierten Wellen werden von dem Empfänger detektiert. Die empfangenen Signale erlauben vermittels der Auswerteeinheit das Feststellen des Abstandes des unmittelbar davor befindlichen Fahrzeuges. Dem Fahrer wird der Abstand zu dem vorausfahrenden Fahrzeug signalisiert. Gleichzeitig wirkt die Auswerteinheit auf eine Stellglied ein, das bei Überschreiten eines einstellbaren Schwellenwertes das Bremssystem aktiviert.

Schließlich beschreibt die DE 196 09 740 A1 eine Auffahrschutzeinrichtung für hintereinanderfahrende Kraftfahrzeuge, bei dem dem jeweils hinteren Fahrzeug vom vorderen Fahrzeug selbsttätig der Beginn eines Bremsvorganges signalisiert wird. Damit das automatische Bremssystem des jeweils vorderen Fahrzeuges auch selbsttätig unmittelbar das automatische Bremssystem des jeweils hinteren Fahrzeuges schalten kann, wird vorausgesetzt, dass die in einer Kolonne hintereinander fahrenden Fahrzeuge mit einem Bremssteuersystem zum automatischen Abbremsen des jeweiligen Fahrzeugs auf einen Bremsbefehl des vorausfahrenden Fahrzeugs ausgestattet sind. Hierzu besitzt das jeweils vordere Fahrzeug einen nach hinten gerichteten Sender mit Senderrechner und das jeweils hintere Fahrzeug einen nach vorne gerichteten Empfänger mit Empfängerrechner, wobei die Sender und Empfängerrechner Mittel zum Vereinbaren eines Controll-Codes aufweisen, der dazu dient, beiden Fahrzeugen mitzuteilen, dass sie hintereinander herfahren. Der Controll-Code soll verhindern, dass ein in Richtung auf das hintere Fahrzeug abgesandtes Bremssignal auch bei anderen Fahrzeugen, z. B. bei Fahrzeugen auf der Gegenseite, Bremsvorgänge auslöst. Es werden mit Licht bzw. Infrarot-Strahlen oder mit Ultraschall arbeitende Sender und Empfänger eingesetzt.

Ausgehend von der DE 196 09 740 A1 liegt der Erfindung die Aufgabe zugrunde, ein Verzögerungssystem für Kraftfahrzeuge vorzuschlagen, das lediglich bei der Notbremsung von Kraftfahrzeugen in Kolonnenfahrt eingreift und unbeabsichtigte Verzögerungen von Kraftfahrzeugen auf benachbarten Fahrstreifen mit geringem Aufwand vermeidet.

Diese Aufgabe wird bei einem Verzögerungssystem der eingangs erwähnen Art dadurch gelöst, dass die Regel-/Steuereinheit bei Überschreiten definierter Verzögerungswerte ein Signal generiert und dieses mittels der mit terrestrischen Richtfunk arbeitenden Sende-/Empfangseinheit richtungsvorgegeben sendet.

Unbeabsichtigte Verzögerungen von Kraftfahrzeugen auf benachbarten Fahrstreifen werden vermieden, in dem das erfindungsgemäße Verzögerungssystem mit einer Sende-/Empfangseinheit arbeitet, die mit terrestrischem Richtfunk richtungsvorgegeben von der Regel-/Steuereinheit erzeugte Signale an nachfolgende Fahrzeuge übermittelt.

Insbesondere bei Kolonnenfahrt auf glatter Fahrbahn durch Nässe, Eis oder Schnee hat sich die Kombination des erfindungsgemäßen Verzögerungssystems mit einem Notbremssystem nach der deutschen Patentschrift DE 43 44 576 C2 als vorteilhaft herausgestellt.

Eine derartige Notbremsvorrichtung vergrößert die bei schlechten Fahrbahnverhältnissen für eine Notbremsung überforderte Reibverbindung zwischen Reifen und Untergrund mittels zusätzlicher, am Fahrzeugunterboden anliegender Bremsplatten, die im Falle der Notbremsung schlagartig, insbesondere pneumatisch abgesenkt werden. Im einzelnen weist die Notbremsvorrichtung mindestens zwei am Fahrzeugunterboden anliegende Bremsplatten, Führungsmittel für jede Bremsplatte und einen auf die Führungsmittel wirkenden Antrieb auf, wobei jedes Führungsmittel eine Führung und eine in der Querschnittsgeometrie zumindest bereichsweise an die Führung angepasste Stange umfasst, die mit dem Antrieb verbunden ist und die Bremsplatten skiförmig sind und eine bogenförmige Spitze besitzen, die sich jeweils von den hinteren Enden der vorderen Radkästen nach hinten erstrecken, die skiförmigen Bremsplatten in Ruhe im Bereich der rechten und linken Karosseriebodenseite anliegen und der Antrieb als elektrischer Linearmotor oder beidseitig beaufschlagbarer Druckmittelzylinder ausgestaltet ist.

Um nach einer von der Regel-/Steuereinheit automatisch ausgelösten Verzögerung, insbesondere Notbremsung beispielsweise auf die Nebenspur ausweichen zu können, kann die von der Sende-/Empfangseinheit ausgelöste Notbremsung mittels eines handbetätigten Schalters aufgehoben werden, der aus sicherheitstechnischen Gründen vorzugsweise in das Lenkrad integriert ist.

Ein vorteilhaftes Betriebsverfahren für eine Kolonne von Kraftfahrzeugen mit einem erfindungsgemäßen Verzögerungssystem ergibt sich aus den Merkmalen des Anspruchs 4: Verzögert beispielsweise der Kraftfahrzeugführer eines ersten Kraftfahrzeuges der Kolonne aufgrund einer plötzlich auftretenden Nebelbank oder Gefahr sein Fahrzeug relativ stark, erzeugt die Steuer-/Regeleinheit dieses Kraftfahrzeugs ein Signal und übermittelt dieses mittels der Sende-/Empfangseinheit richtungsvorgegeben mit terrestrischem Richtfunk an die Sende-/Empfangseinheit des unmittelbar folgenden Kraftfahrzeuges. Die Regel-/Steuereinheit des nachfolgenden Kraftfahrzeuges löst dessen Bremssystem aus und erzeugt gleichzeitig bei Überschreiten definierter Verzögerungswerte ein Signal, das dann wiederum richtungsvorgegeben an das darauffolgende Kraftfahrzeug weitergegeben wird.

Infolge dessen wird im Falle einer plötzlichen Notbremsung eines Fahrzeuges in einer Fahrzeugkolonne automatisch die gesamte Fahrzeugkolonne abgebremst, ohne dass es infolge der Reaktionszeiten der einzelnen Kraftfahrzeugführer zu Auffahrunfällen kommen kann.

Die erfindungsgemäßen Verzögerungssysteme lassen sich jedoch nicht nur bei Kolonnenfahrt wirksam einsetzen, sondern auch im Rahmen der auf deutschen Autobahnnetzen fast flächendeckend vorhandenen Verkehrsbeeinflussungsanlagen. So ist es ohne weiteres möglich, dass das Kraftfahrzeug über seine Sende-/Empfangseinheit ein richtungsvorgegebenes definiertes Signal von stationären, im Bereich der Fahrbahn angeordneten Sendern empfängt, wenn eine aktuelle Störung im Bereich des stationären Senders eine Verzögerung des Fahrzeugs erfordert. Die Sender können beispielsweise auf den ohnehin vorhandenen Notrufsäulen, jedoch auch an Verkehrsbrücken oder Verkehrszeichen angeordnet sein, um situationsabhängig eine Verzögerung der Kraftfahrzeuge herbeizuführen. Auffahrunfälle infolge dieser gezielten Verzögerung sind ebenfalls nicht zu befürchten, da im Fall der Kolonnenfahrt bei einer Ausrüstung sämtlicher Fahrzeuge mit dem erfindungsgemäßen Verzögerungssystem automatisch das Betriebsverfahren nach den Merkmalen des Anspruchs 4 zum Tragen kommt.

Nachfolgend wird das erfindungsgemäße Verzögerungssystem anhand einer Prinzipskizze näher erläutert.

Auf der insgesamt mit F bezeichneten zweistreifigen Fahrbahn befindet sich auf dem rechten Fahrstreifen eine Fahrzeugkolonne mit den Fahrzeugen F1 bis Fn. Beim plötzlichen Auftreten einer in der Skizze mit ST bezeichneten Störung, wie beispielsweise einer Nebelbank, verzögert der Kraftfahrzeugführer des ersten Fahrzeuges F1 sein Fahrzeug stark. Die in der Skizze nicht dargestellt Steuer-/Regeleinheit seines Kraftfahrzeuges generiert nunmehr ein Signal S1, da ein in der Steuer-/Regeleinheit hinterlegten Verzögerungswert überschritten wurde. Dieses Signal S1 wird nun in Richtung des Fahrzeuges F2 mittels einer ebenfalls nicht dargestellten Sende-/Empfangseinheit im Fahrzeug F1 an die Sende-/Empfangseinheit des folgenden Kraftfahrzeugs F2 mittels terrestrischem Richtfunk gesendet. Erkennbar ist, dass die Stärke des Signals S1 so schnell abnimmt, dass bei Wahrung der üblichen Fahrzeugabstände eine Notbremsung lediglich des darauf folgenden Fahrzeuges F2 unmittelbar durch das Signal S1 des Fahrzeugs F1 ausgelöst wird. Sobald das Signal S1 von der Sende-/Empfangseinheit des Fahrzeuges F2 empfangen worden ist, löst dessen Regel-/Steuereinheit ein Bremssystem des Kraftfahrzeuges aus und generiert wiederum ein Signal, das das darauffolgende Kraftfahrzeug F3 in der selben Weise abbremst.

Da die erfindungsgemäßen Verzögerungssysteme in erster Linie für die Verzögerung in Notsituationen vorgesehen sind, ist davon auszugehen, dass bei Übermittlung eines Signals S ₁₋ₙ von dem voraus fahrenden Fahrzeuges stets eine Notbremsung ausgelöst wird und daher stets von dem folgenden Fahrzeug ein Signal generiert wird, das wiederum das darauf folgende Fahrzeug notbremst usw.

Denkbar ist jedoch auch eine Betriebsweise, die bei moderateren Verzögerungen differenziertere Signale S über die Sende-/Empfangseinheit an darauf folgende Fahrzeuge übermittelt und lediglich moderatere Verzögerungen des darauf folgenden Fahrzeuges, beispielsweise durch Reduktion der Motorleistung auslöst.

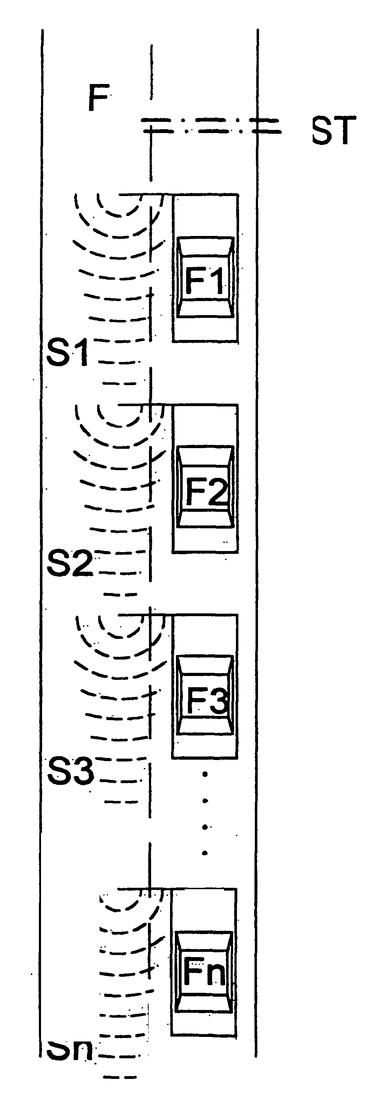

## Patentansprüche

1. Verzögerungssystem für Kraftfahrzeuge, wobei das Kraftfahrzeug mit einer Sende/Empfangseinheit sowie einer Regel-/Steuereinheit ausgerüstet ist, die bei Empfang eines definierten Signals mindestens ein Bremssystem des Kraftfahrzeuges auslöst, **dadurch gekennzeichnet, dass** die Regel-/Steuereinheit bei Überschreiten definierter Verzögerungswerte ein Signal generiert und dieses mittels der mit terrestrischen Richtfunk arbeitenden Sende-/Empfangseinheit richtungsvorgegeben sendet.

2. Verzögerungssystem für Kraftfahrzeuge nach Anspruch 1, **dadurch gekennzeichnet, dass** das Bremssystem ein Notbremssystem ist.

3. Verzögerungssystem für Kraftfahrzeuge nach Anspruch 1 oder 2, **dadurch gekennzeichnet, dass** die von der Sende-/Empfangseinheit ausgelöste Notbremsung mittels eines handbetätigten Schalters aufgehoben werden kann.

4. Betriebsverfahren für eine Kolonne von Kraftfahrzeugen mit einem Verzögerungssystem für Kraftfahrzeuge nach einem der Ansprüche 1 bis 3, **dadurch gekennzeichnet, dass** die Regeleinheit eines ersten Kraftfahrzeuges der Kolonne bei Überschreiten definierter Verzögerungswerte ein Signal generiert und dieses richtungsvorgegeben mittels der Sende-/Empfangseinheit mit terrestrischem Richtfunk an die Sende-/Empfangseinheit eines unmittelbar folgenden Kraftfahrzeuges der Kolonne sendet, dessen Regel-/Steuereinheit ein Bremssystem des Kraftfahrzeuges auslöst und gleichzeitig bei Überschreiten definierter Verzögerungswerte ein Signal generiert und dieses wiederum richtungsvorgegeben an das unmittelbar folgende Kraftfahrzeug der Kolonne sendet, wobei sämtliche weiteren Fahrzeuge der Kolonne übereinstimmend abgebremst werden.

5. Betriebsverfahren für mindestens ein Kraftfahrzeug mit einem Verzögerungssystem für Kraftfahrzeuge nach einem der Ansprüche 1 bis 3, **dadurch gekennzeichnet, dass** das Kraftfahrzeug über seine Sende-/Empfangseinheit ein richtungsvorgegebenes definiertes Signal von stationären, im Bereich der Fahrbahn angeordneten Sendern empfängt, das über die Regel-/Steuereinheit mindestens ein Bremssystem des Kraftfahrzeuges auslöst und die Regel-/Steuereinheit bei Überschreiten definierter Verzögerungswerte ein Signal generiert und dieses richtungsvorgegeben mittels der Sende-/Empfangseinheit mit terrestrischem Richtfunk an die Sende-/Empfangseinheit eines unmittelbar folgenden Kraftfahrzeuges der Kolonne sendet.

## Claims

1. A deceleration system for motor vehicles, wherein the motor vehicle is equipped with a transmitting/receiving unit and a regulating/control unit that triggers at least one brake system of the motor vehicle when a defined signal is received, **characterized in that** the regulating/control unit generates a signal when defined deceleration values are exceeded, and **in that** this signal is directionally transmitted by means of the transmitting/receiving unit in accordance with a terrestrial radio relay.

2. The deceleration system for motor vehicles according to Claim 1, **characterized in that** the brake system consists of an emergency braking system.

3. The deceleration system for motor vehicles according to Claim 1 or 2, **characterized in that** the emergency braking maneuver triggered by the transmitting/receiving unit can be cancelled by means of a manually actuated switch.

4. A method for operating a deceleration system for motor vehicles according to one of Claims 1-3 in a queue of motor vehicles, **characterized in that** the regulating unit of the first motor vehicle driving in queue generates a signal when defined deceleration values are exceeded and its transmitting/receiving unit directionally transmits this signal to the transmitting/receiving unit of the immediately trailing motor vehicle by means of a terrestrial radio relay, wherein the regulating/control unit of this trailing motor vehicle triggers its brake system and, once defined deceleration values are exceeded, simultaneously generates a signal that is directionally transmitted to the respectively trailing motor, and wherein all other motor vehicles driving in queue are decelerated accordingly.

5. A method for operating a deceleration system for motor vehicles according to one of Claims 1-3 in at least one motor vehicle, **characterized in that** the transmitting/receiving unit of the motor vehicle directionally receives a defined signal from stationary transmitters arranged within the region of the roadway, wherein said signal triggers at least one brake system of the motor vehicle via the regulating/control unit and the regulating/control unit generates a signal when defined deceleration values are exceeded, and wherein this signal is directionally transmitted by the transmitting/receiving unit to the transmitting/receiving unit of the immediately trailing motor vehicle driving in queue by means of a terrestrial radio relay.

## Revendications

1. Système de décélération pour véhicules automobiles, où le véhicule automobile est équipé d'une unité d'émission/réception ainsi que d'une unité de régulation/commande, laquelle déclenche au moins un système de freinage du véhicule automobile en cas de réception d'un signal défini, **caractérisé en ce que** l'unité de régulation/commande génère un signal en cas de dépassement par le haut de valeurs de décélération définies, et émet ce signal selon une direction imposée à l'aide de l'unité d'émission/réception travaillant avec radiodiffusion terrestre par faisceau dirigé.

2. Système de décélération pour véhicules automobiles selon la revendication 1, **caractérisé en ce que** le système de freinage est un système de freinage de secours.

3. Système de décélération pour véhicules automobiles selon l'une quelconque des revendications 1 ou 2, **caractérisé en ce que** le freinage en urgence déclenché par l'unité d'émission/réception peut être interrompu à l'aide d'un commutateur manuel.

4. Procédé de fonctionnement pour une file de véhicules automobiles avec un système de décélération pour véhicules automobiles selon l'une quelconque des revendications 1 à 3, **caractérisé en ce que** l'unité de régulation d'un premier véhicule automobile de la file génère un signal en cas de dépassement par le haut d'une valeur de décélération définie, et **en ce qu'**elle émet ce signal selon une direction imposée à l'aide de l'unité d'émission/réception avec radiodiffusion terrestre par faisceau dirigé à l'attention de l'unité d'émission/réception d'un véhicule automobile de la file qui suit directement derrière, dont l'unité d'émission/réception déclenche un système de freinage du véhicule automobile et génère simultanément un signal en cas de dépassement par le haut de valeurs de décélération définies, et émet à son tour ce signal selon une direction imposée à l'attention du véhicule de la file qui suit directement derrière, moyennant quoi tous les autres véhicules de la file sont soumis à une décélération de manière correspondante.

5. Procédé de fonctionnement pour au moins un véhicule automobile avec un système de décélération pour véhicules automobiles selon l'une quelconque des revendications 1 à 3, **caractérisé en ce que** le véhicule automobile réceptionne un signal défini à direction imposée via son unité d'émission/réception provenant d'émetteurs stationnaires disposés dans la zone de la voie de circulation, lequel signal déclenche au moins un système de freinage du véhicule automobile via l'unité de régulation/commande, et **en ce que** l'unité de régulation/commande génère un signal en cas de dépassement par le haut de valeurs de décélération définies, et émet celui-ci selon une direction imposée à l'aide de l'unité d'émission/réception avec radiodiffusion terrestre par faisceau dirigé à l'attention de l'unité d'émission/réception d'un véhicule automobile qui suit directement derrière.
